# EUROPEAN PATENT APPLICATION

(11) **EP 1 441 403 A2**
(43) Date of publication of application: **28.07.2004**
(21) Application number: 03027727.1
(22) Date of filing: 02.12.2003
(51) Int. Cl.: H01M 8/02

(54) **Gastight gasket assembly for gas channels of fuel cell stack**

(30) Priority: 10.12.2002 CN 02155245
(71) Applicant: Asia Pacific Fuel Cell Technologies, Ltd., Chunan, Miaoli 350 (TW)
(72) Inventor: Yang, Jefferson YS, 4F, No. 22, Ke-Dung 3 Road Miaoli 350 (TW); Yang, Te-Chou, 4F, No. 22, Ke-Dung 3 Road Miaoli 350 (TW)
(74) Representative: Goddar, Heinz J., Dr.

(57) **Abstract**

A gasket assembly for gas channels of a fuel cell stack is disclosed. A central part of a bipolar plate of the fuel cell stack is formed with a plurality of channels which is connected to a gas passage via a collective channel and a plurality of communication channels. A reception region is formed across a middle section of the communication channels and a pressure resistant packing is mounted in the reception region, forming a smooth and flat plane with the ridges of the partitions outside the reception region. A gasket is mounted between the bipolar plate and the membrane electrode assembly and acts with the packing to form a gastight gasket assembly in the form of a dual gasket structure.

## Description

### BACKGROUND OF THE INVENTION

### 1. Field of the Invention

The present invention relates to a fuel cell stack, and in particular to a gastight gasket assembly for gas channels of a fuel cell stack. The gastight gasket assembly provides a tight sealing effect to prevent fluid leakage and is strong in strength to resist gas pressure.

### 2. Description of the Prior Art

A fuel cell is a power-generating unit that generates electrical energy through electrochemical reaction of hydrogen and oxygen. To perform electrochemical reaction, hydrogen gas and air are separately conveyed to the fuel cell via hydrogen gas passage and air passage. For the purpose of safety, the passages are designed to be gastight, so that either hydrogen gas or air does not leak through the passages. Otherwise, the performance of fuel cell is reduced and dangers would be caused.

Conventionally, a fuel cell stack comprises a plurality of cell units. Each of the cell units includes a membrane electrode assembly (MEA) which comprises a proton exchange membrane, an anode catalyst layer and a cathode catalyst layer. The cell unit also comprises an anode gas diffusion plate, an anode bipolar plate, an anode current collector and an anode endplate at an anode side of the membrane electrode assembly, and a cathode gas diffusion plate, a cathode bipolar plate, a cathode current collector and a cathode endplate at a cathode side of the membrane electrode assembly.

For the conduction of hydrogen gas and air to the cell units to perform electrochemical reaction and generate electrical power, the fuel cell stack is internally formed with a plurality of gas passages. Take for an example. Hydrogen gas is supplied by a hydrogen gas storage e.g. a hydrogen gas canister and is conveyed into the fuel cell stack via a hydrogen gas inlet. Then, hydrogen gas flows via a hydrogen passage to a hydrogen gas inlet port of the bipolar plate of each cell unit, and then through a number of communication channels to a plurality of channels formed on a surface of the bipolar plate. In the channels, hydrogen gas passes the gas diffusion layer and reaches the membrane electrode assembly, and performs electrochemical reaction thereon.

In conventional fuel cell stack, for the purpose of keeping tight seal to prevent gas leakage, a gasket is mounted and sandwiched in between two adjacent bipolar plates. By means of the gasket, the gas channels and communication channels are tightly sealed, and thereby when a gas flow through, leakage is avoided.

Moreover, air and hydrogen gas are usually supplied to the fuel cell stack at predetermined high pressures. When air and hydrogen gas flow through the communication channels, they exert a significant pressure at the corresponding adjacent gaskets. In other words, the gasket continuously suffers from the impact of gases flowing therethrough. Subsequently, the gaskets are damaged and depressions are formed. As time goes on, the depressions on the gaskets would be enlarged and deterioration becomes more and more serious. Eventually, gas leakage is inevitably happened and even the electrode membrane assembly is damaged. To overcome the mentioned problems, various types of gas channels are developed. For example, a prior art discloses a plurality of through holes communicated between the passage and channels for conduction of gas. However, such a structure is complicated and therefore increases the processes and time of production. As a whole, the production cost is raised.

It is therefore desirable to develop a sealing structure which provides good sealing effect and is strong enough to substantially resist gas pressure to overcome the problems and secure the safe use of fuel cell stack in long term.

### SUMMARY OF THE INVENTION

Thus, an object of the present invention is to provide a gastight gasket assembly for gas channels of a fuel cell stack, so as to prevent gas leakage and secure the safety in operation of the fuel cell stack.

Another object of the present invention is to provide a gastight gasket assembly for gas channels of a fuel cell stack. The gasket assembly comprises a dual gasket structure which provides excellent gas tightness and is strong in strength to resist gas pressure.

A further object of the present invention is to provide a gastight gasket assembly that is simple in structure. The gasket assembly is strong in strength to resist high gas pressure and can act in coordination with the conventional channels to provide good sealing effect. Moreover, the manufacture of the gastight gasket assembly is very simple and easy.

To achieve the above and other objects, in accordance with the present invention, there is provided a fuel cell stack with gastight gasket assembly. The fuel cell stack comprises two bipolar plates and a membrane electrode assembly, a central part of each the bipolar plates is formed with a plurality of parallel channels, two ends of the channels being connected via a plurality of communication channels respectively to a gas inlet passage and a gas outlet passage. A top surface of a middle section of the communication channels is formed with a reception region for mounting of a pressure resistant packing. A gasket is mounted between the bipolar plate and adjacent membrane electrode assembly. The pressure resistant packing and the gasket form a dual gasket structure which is capable of providing tight sealing and is strong in strength to resist gas pressure. When the pressure resistant packing is mounted in the reception region, the top surface of the packing forms a smooth and flat plane with the ridges of the partitions between adjacent communication channels outside the reception region.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein

**Fig. 1** is a perspective exploded view of a fuel cell stack with a gastight gasket assembly constructed in accordance with the present invention;

**Fig. 2** is a perspective view of a cathode bipolar plate of the fuel cell stack of **Fig. 1;**

**Fig. 3** is an enlarged view of encircled portion **A** of **Fig. 2**;

**Fig. 4** is a front view of a cathode bipolar plate of **Fig. 2**;

**Fig. 5** is a sectional view taken along line **5-5** of **Fig. 4**;

**Fig. 6** is a sectional view of the cathode bipolar plate of **Fig. 5**, showing a pressure resistant packing, a third gasket, a membrane electrode assembly, a first gasket and an anode bipolar plate stacking in a sequence;

**Fig. 7** is a front view of the anode bipolar plate of **Fig. 1**; and

**Fig. 8** is a sectional view taken along line **8-8** of **Fig. 7**.

### DETAILED DESCRIPTION OF THE PREFERRED EMBODIMENTS

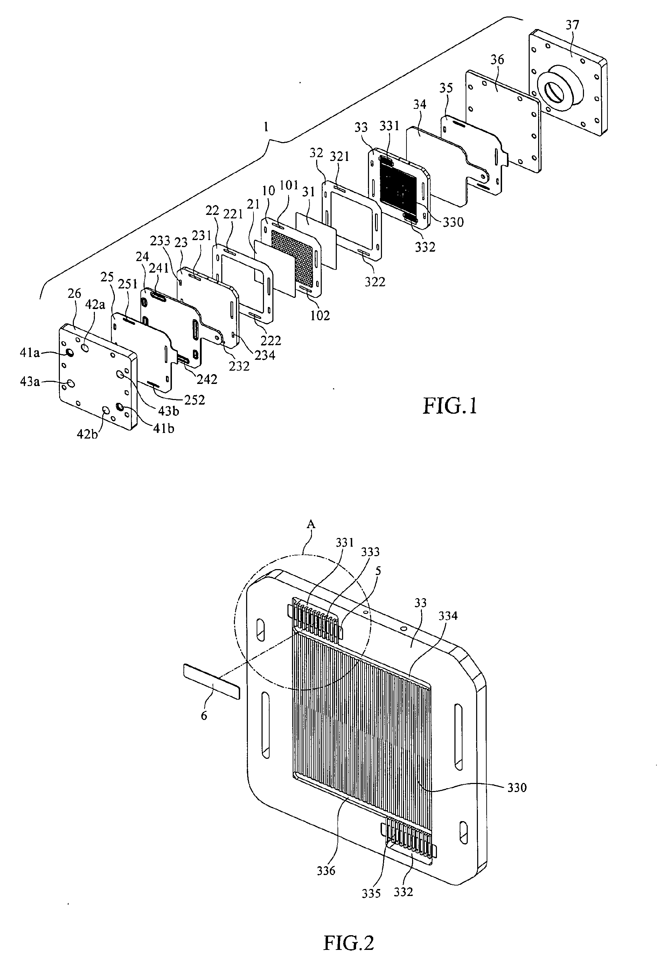

With reference to the drawings and in particular to **Fig. 1**, a fuel cell stack with a gastight gasket assembly is shown. The fuel cell stack **1** includes a membrane electrode assembly (MEA) **10** which comprises a proton exchange membrane, an anode catalyst layer and a cathode catalyst layer. The fuel cell stack **1** further comprises an anode gas diffusion plate **21**, a first gastight gasket **22**, an anode bipolar plate **23**, an anode current collector **24**, a second gastight gasket **25** and an anode endplate **26** arranged in sequence at an anode side of the membrane electrode assembly **10**. The fuel cell stack **1** also comprises a cathode gas diffusion plate **31**, a third gastight gasket **32**, a cathode bipolar plate **33**, a cathode current collector **34**, a fourth gastight gasket **35**, a cover plate **36** and a cathode endplate **37** at the cathode side of the membrane electrode assembly **10**. All the plates and components are stacked and mounted to form a fuel cell stack and fastened together by means of known fastening members.

An external side of the anode endplate **26** is formed with a hydrogen gas inlet **41a** and a hydrogen gas outlet **41b**. Hydrogen gas is supplied by a hydrogen gas storage, such as an alloy based hydrogen canister, and is conveyed through the hydrogen gas inlet **41a** to a hydrogen gas passage formed in the fuel cell stack **1** to perform electrochemical reaction. Excessive hydrogen gas is conveyed out via the hydrogen gas outlet **41b**.

The external side of the anode endplate **26** also formed with an air inlet **42a** and an air outlet **42b**. Air is drawn in by a blowing device e.g. a blower and is conveyed via the air inlet **42a** to an air passage formed in the fuel cell stack **1** to perform electrochemical reaction. Excessive air is conveyed out via the air outlet **42b**.

Furthermore, the external side of the anode endplate **26** is formed with a coolant inlet **43a** and a coolant outlet **43b**. Coolant is conveyed in via the coolant inlet **43a** to a coolant passage formed in the fuel cell stack **1** and conveyed out via the coolant outlet **43b**. Coolant flows through the channels and removes heat from the fuel cell stack **1**, so that the fuel cell stack **1** is appropriately cooled at operation.

The hydrogen gas passage, the air passage and the coolant passage formed in the fuel cell stack **1** are sealed by means of the first, second, third and fourth gastight gaskets **22, 25, 32, 35** to prevent leakage.

Take for an example. In the operation of the fuel cell stack **1**, air is drawn into the air inlet **42a** of the anode endplate **26** and flows through the air inlet ports and air outlet ports of respective plates and components in sequence. Air flows through an air inlet port **251** of the second gasket **25**, an air inlet port **241** of the anode current collector **24**, an air inlet port **231** of the anode bipolar plate **23**, an air inlet port **221** of the first gasket **22**, an air inlet port **101** of the membrane electrode assembly **10**, an air inlet port **321** of the third gasket **32** and an air inlet port **331** of the cathode bipolar plate **33**. Then air flows through the air channels **330** of the cathode bipolar plate **33** and is conveyed out through the air outlet port **332**.

Subsequently, air from the air outlet port **322** of the cathode bipolar plate **33** flows through an air outlet port **102** of the membrane electrode assembly **10**, an air outlet port **222** of the first gastight gasket **22**, an air outlet port **232** of the anode bipolar plate **23**, an air outlet port **242** of the anode current collector **24**, an air outlet port **252** of the second gastight gasket **25**, and finally the air outlet **42b** of the anode endplate **26**.

In the embodiment, the fuel cell stack comprises a single cell unit. In other embodiments, the fuel cell stack may comprise a plurality of stacked cell units. Basically, the structure of each of the cell units is similar. Preferably, a cooling plate is mounted for conveying coolant to cool down the temperature of the fuel cell stack.

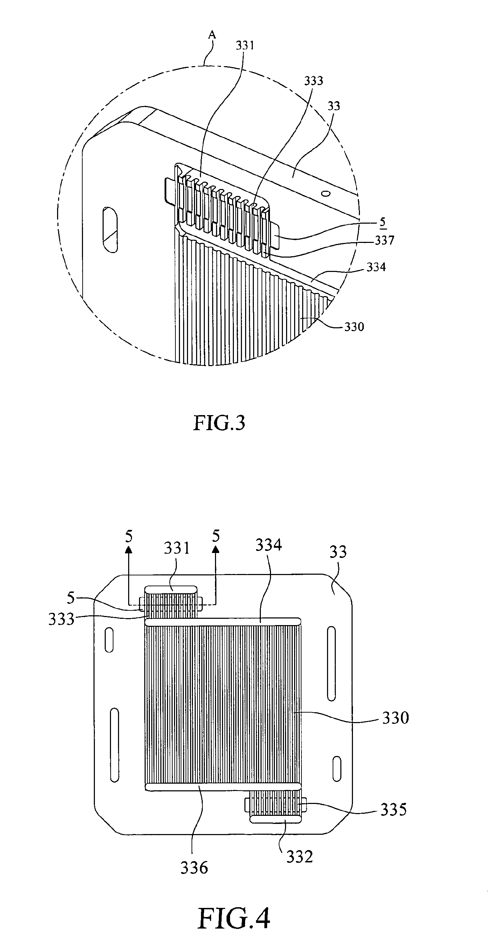

**Fig. 2** is a perspective view of the cathode bipolar plate of the fuel cell stack of **Fig. 1**, **Fig. 3** is an enlarged view of encircled portion **A** of **Fig. 2**, and **Fig. 4** is a front view of the cathode bipolar plate of **Fig. 2**. As shown in the drawings, the central part of the cathode bipolar plate **33** is formed with a plurality of parallel channels **330** in the form of continuous corrugation or U-shaped structure. Air from the air inlet port **331** is conducted to flow through the channels **330** of the cathode bipolar plate **33** and is conveyed out through the air outlet port **332**. When passing the channels **330**, air flows through the cathode gas diffusion plate **31** to the cathode catalyst layer of the membrane electrode assembly **10** for performing electrochemical reaction thereon.

The air inlet port **331** of the cathode bipolar plate **33** is communicated with the channels **330** by means of a plurality of communication channels **333** and a collective channel **334**. The other ends of the channels **330** are also connected via a collective channel **336** to a plurality of communication channels **335**.

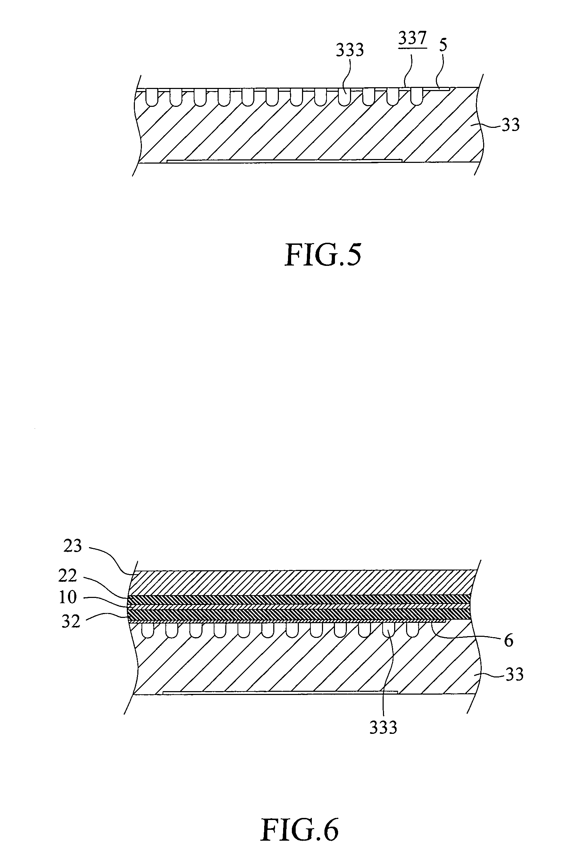

Please also refer to **Figs. 4** and **5**. A middle section of the communication channels **333** is formed with a reception region **5** with a width perpendicular to the longitudinal extension direction of the communication channels **333**. The width of the reception region **5** is larger than the total width of all the communication channels **333** and partitions between adjacent channels **333**. The partitions within the reception region **5** is shorter in height, so that the whole reception region **5** forms a recess for locating a pressure resistant packing **6**. The pressure resistant packing **6** is formed of hard polymer e.g. Teflon.

As shown in **Fig. 6**, when the pressure resistant packing **6** is located in the reception region **5**, it covers the top of the communication channels **333**. The pressure resistant packing **6** has a predetermined thickness so that its top surface forms a smooth and flat plane with the ridges of the partitions outside the reception region **5**. When the cathode bipolar plate **33** is combined with the third gastight gasket **32**, the membrane electrode assembly **10**, the first gastight gasket **22**, the anode bipolar plate **23** and other plates and components, the pressure resistant packing **6** and the third gastight gasket **32** form a gastight gasket assembly with a dual gasket structure which provides excellent sealing effect and is strongly resistant to pressure, highly securing the sealing of air.

In the above description, the present invention is illustrated by referring to an embodiment in which the gastight gasket assembly is applied in a cathode bipolar plate. Of course, the present invention may also be applied to any channels, e.g. the hydrogen gas channels, coolant channels, and so on.

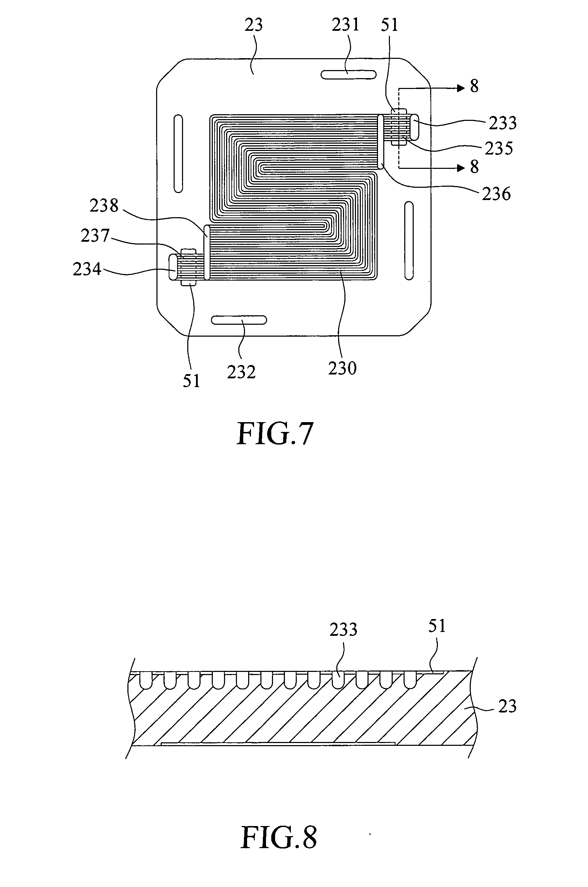

**Fig. 7** is a front view of the anode bipolar plate of **Fig. 1** and **Fig. 8** is a sectional view taken along line **8-8** of **Fig. 7**. As shown, the central part of the anode bipolar plate **23** is formed with a plurality of parallel and serpentine channels **230**. Hydrogen gas from a hydrogen inlet port **233** is conducted to flow through the channels **230** of the anode bipolar plate **23** and is conveyed out through a hydrogen gas outlet port **234**. In passing the channels **230**, hydrogen gas flows through the anode gas diffusion plate **21** to the anode catalyst layer of the membrane electrode assembly **10** for performing electrochemical reaction thereon.

The hydrogen gas inlet port **233** of the anode bipolar plate **23** is communicated with the channels **230** by means of a plurality of communication channels **235** and a collective channel **236**. The other ends of the channels **230** are also connected to the hydrogen gas outlet port **234** via a collective channel **238** and a plurality of communication channels **237**.

Similarly, two reception regions **51** are respectively formed across the middle sections of the communication channels **235**, **237**. Please refer to **Fig. 8** which is a sectional view taken along line **8-8** of **Fig. 7**. The structures of the reception regions **51** are similar to that of the reception region **5** of the cathode bipolar plate, which form a recess for locating the pressure resistant packing **6**. The pressure resistant packing **6** and the first gasket **22** form a dual gasket structure. The dual gasket structure is strong in resisting the gas pressure and provides excellent gastight effect between the anode bipolar plate **23** and the membrane electrode assembly **10**, effectively avoiding the leakage of hydrogen gas.

In the preferred embodiment, the fuel cell stack **1** comprises a single cell unit **10**. In the application of the present invention, the fuel cell stack **1** may comprise a plurality of cell units. Anyway, the present invention is equally effective and applicable to a fuel cell stack with a plurality of cell units. From the above description, it is apparent that the present invention provides excellent sealing effect against leakage and is strong in strength to resist gas pressure. The present invention can secure the sealing of gas channels and is practical in use.

Although the present invention has been described with reference to the preferred embodiments thereof, it is apparent to those skilled in the art that a variety of modifications and changes may be made without departing from the scope of the present invention which is intended to be defined by the appended claims.

The features disclosed in the foregoing description, in the claims and/or in the accompanying drawings may, both separately and in any combination thereof, be material for realising the invention in diverse forms thereof.

## Claims

1. A gasket assembly for a fuel cell stack provided with at least one bipolar plate, a plurality of parallel gas channels being formed on a surface of the bipolar plate and the gas channels being communicated with a gas passage via a plurality of communication channels spaced from each other with a partition, comprising:
at least one reception region located on a top surface of the communication channels, the width of the reception region at a direction perpendicular to a longitudinal extending direction of the communication channels being larger than the total width of the communication channels; and
a pressure resistant packing located in the reception region.

2. The gasket assembly as claimed in claim 1, wherein when the pressure resistant packing is located in the reception region, a top surface of the pressure resistant packing forming a smooth and flat plane with a ridge of each partition outside the reception region.

3. The gasket assembly as claimed in claim 1, wherein the pressure resistant packing is made of hard polymer.

4. The gasket assembly as claimed in claim 1, wherein the bipolar plate is a cathode bipolar plate of the fuel cell stack.

5. The gasket assembly as claimed in claim 1, wherein the bipolar plate is an anode bipolar plate of the fuel cell stack.

6. A fuel cell stack comprising at least one cell unit, each cell unit comprising:
a membrane electrode assembly having an anode side and a cathode side;
an anode bipolar plate mounted on the anode side of the membrane electrode assembly, provided with a gasket interposed between the anode bipolar plate and the membrane electrode assembly;
a cathode bipolar plate mounted on the cathode side of the membrane electrode assembly, provided with a gasket interposed between the cathode bipolar plate and the membrane electrode assembly;
at least one gas passage which is formed in the fuel cell stack, the gas passage being communicated with a plurality of channels formed on the anode bipolar plate and the cathode bipolar plate via a plurality of communication channels for separately conveying hydrogen gas and air to the anode bipolar plate and the cathode bipolar plate; and
at least one pressure resistant packing located on a top of each communication channel.

7. The fuel cell stack as claimed in Claim 6, wherein the communication channels are formed with a reception region on the top of each communication channel for locating the pressure resistant packing.

8. The fuel cell stack as claimed in Claim 7, wherein the reception region has a width larger than a total width of the communication channels and partitions, the width of the reception region being perpendicular to the longitudinal extending direction of the communication channels, the reception region comprising the partitions within the reception region forming a recess for locating the pressure resistant packing thereon.

9. The fuel cell stack as claimed in Claim 7, wherein the pressure resistant packing has a predetermined thickness so that when it is mounted in the reception region, a top surface of the pressure resistant packing forms a smooth and flat plane with ridges of the partitions outside the reception region.

10. The fuel cell stack as claimed in Claim 6, wherein the pressure resistant packing is made of hard polymer.

11. The fuel cell stack as claimed in Claim 6, wherein the pressure resistant packing is located on the communication channels between an air inlet port of the cathode bipolar plate and the air channels at a central part of the cathode bipolar plate.

12. The fuel cell stack as claimed in Claim 6, wherein the pressure resistant packing is located on the communication channels between an air outlet port of the cathode bipolar plate and the air channels at the central part of the cathode bipolar plate.

13. The fuel cell stack as claimed in Claim 6, wherein the pressure resistant packing is located on the communication channels between a hydrogen gas inlet port of the anode bipolar plate and the hydrogen gas channels at a central part of the anode bipolar plate.

14. The fuel cell stack as claimed in Claim 6, wherein the pressure resistant packing is located on the communication channels between a hydrogen gas outlet port of the anode bipolar plate and the hydrogen gas channels at a central part of the anode bipolar plate.
